Europäisches Patentamt

European Patent Office

Office européen des brevets

(11) Publication number: **0 097 513**
**B1**

⑱

(12) **EUROPEAN PATENT SPECIFICATION**

(45) Date of publication of patent specification: **18.12.85**

(51) Int. Cl.⁴: **C 04 B 24/26**

(21) Application number: **83303534.8**

(22) Date of filing: **20.06.83**

(54) **Cementiferous compositions.**

(30) Priority: **21.06.82 US 390167**

(43) Date of publication of application:
**04.01.84 Bulletin 84/01**

(45) Publication of the grant of the patent:
**18.12.85 Bulletin 85/51**

(84) Designated Contracting States:
**DE FR GB IT**

(56) References cited:
**AT-B- 275 397**
**CH-A- 485 397**
**GB-A-1 388 350**
**GB-A-2 018 737**

**Chemical Abstracts vol. 91, no. 16, 15 October 1979, Columbus, Ohio, USA M. GIERLOFF "Plastic dispersions based on polyacrylic acid esters as concrete additives", page 288, column 2, abstract no. 127973d**

(73) Proprietor: **National Starch and Chemical Corporation**
**Box 6500**
**Bridgewater, N.J. 08807 (US)**

(72) Inventor: **Bradley, Geoffrey**
**21 Aldridge Drive Burtonwood**
**Warrington Cheshire (GB)**
Inventor: **Szymanski, Chester D.**
**784 Van Nest Drive**
**Martinsville New Jersey 08836 (US)**

(74) Representative: **Farndon, John Ernest**
**UNILEVER PLC Patents Division P.O. Box 68**
**Unilever House**
**London EC4P 4BQ (GB)**

Courier Press, Leamington Spa, England.

## Description

This invention relates to cementiferous compositions and to additives for use in such compositions, which improve the physical characteristics such as the flow and workability of such compositions.

The term "cementiferous compositions", which is synonymous with the term "cementitious compositions", is to be construed to include concretes which comprise cement, coarse and fine aggregates and water; cement pastes which comprise cement and water, and mortars which comprise cement, sand and water; lime, sand and water, or mixtures containing both lime and cement. The invention is also applicable to high-pressure, steam-cured concretes comprising cement, aggregate and water; lime or limestone and siliceous materials such as silica flour and water.

The additives with which this invention is concerned are sometimes referred to as plasticisers for concrete. Their purpose is to improve the flow characteristics of the cementiferous compositions containing them so that they may be pumped or effectively poured to fill all the spaces in a mold or other structure and yet not have their strength characteristics weakened by the inclusion of excessive amounts of air which, in certain circumstances, would be undesirable. In addition, these additives can be used to design cementiferous compositions with a reduced water content. This permits the production of concretes having higher compressive strength when cured and also adequate flow properties for certain applications.

Various additives for use in cementiferous compositions have been previously proposed, including for example, lignosulphonates and sodium naphthalene sulphonate formaldehyde condensates. Details of such materials are set out in "Chemical Admixtures for Concrete" by M. R. Rixom, published by E. and F. N. Spon Limited, London, and by the Halstead Press, a division of John Wiley and Sons Incorporated of New York, U.S.A., where, at page 34, various known additives are considered.

In British Patent Specification No. 2 018 737 there are disclosed homogeneous, uncured cementiferous compositions which comprise a hydraulic cement, water and acid copolymers having selected proportions of carboxyl groups. The polymers are said to be water-dispersible and contain carboxyl groups in an amount equivalent to at least 50 mg KOH/gram of polymer. The purpose of these dispersible polymers is stated to provide compositions which are amenable to shaping and, when cured, are of high strength.

British Patent Specification No. 1 388 350 is concerned with a method for curing a cement composition using a water-insoluble (co) polymer of $C_1$—$C_8$ alcohol methacrylates. It is required that the polymer has a glass transition temperature of at least 10°C and the cure is effected after an initial setting at a temperature of at least 40°C. The polymer is clearly insoluble and contains no hydroxyl groups.

Various polymeric materials have been evaluated as plasticiser additives for cementiferous compositions and it has been found that certain copolymers and their soluble salts comprising polymerisable carboxylic acids and the hydroxy alkyl esters of such acids have particular merit in this application.

This invention provides a cementiferous composition comprising, as a plasticiser additive, a copolymer, or soluble salt thereof, comprising from 50 to 95 mole% of an ethylenically polymerisable carboxylic acid and from 5 to 50 mole% of a hydroxy alkyl ester of an ethylenically polymerisable carboxylic acid.

The additives may conveniently contain an anti-foaming agent, alternatively known as an air detraining agent. Suitable agents include tributyl phosphate, dibutyl phthalate, various water-insoluble alcohols and silicone derivatives.

In accordance with a further aspect of this invention, there is provided a plasticiser additive composition comprising an aqueous solution of a copolymer or soluble salt thereof, comprising from 50 to 95 mole% of an ethylenically polymerisable carboxylic acid and from 5 to 50 mole% of a hydroxy alkyl ester of an ethylenically polymerisable carboxylic acid, and an effective amount of an anti-foaming agent.

Preferably, the amount of anti-foaming agent in the composition is in the range 0.1% to 2.0% by weight of the copolymer or salt thereof.

Suitable acids include acrylic, methacrylic, crotonic, maleic,. fumaric, itaconic, citraconic, and/or aconitic acids and like ethylenically unsaturated acids. The preferred acids are acrylic, methacrylic, and maleic acid, with acrylic or methacrylic acids being most preferred. Suitable esters include the hydroxy ethyl, hydroxy propyl, and like esters of the above acids. The preferred are those having up to $C_8$ hydroxy alkyl groups, most preferably hydroxy propyl acrylate. Preferred copolymers include copolymers of acrylic acid and hydroxy ethyl acrylate or methacrylate and of acrylic or methacrylic acid and hydroxypropyl acrylate or methacrylate. The most preferred copolymer is that of acrylic or methacrylic acid and hydroxy propyl methacrylate.

Preferably the mole percentage of the acrylic acid in the copolymer is in the range of 60 to 85 mole%. Absolute molecular weight of the copolymers of this invention have not been determined. However, apparent molecular weights as calculated relative to polyethylene glycol standards have been determined, using gel permeation chromatography. The apparent molecular weight of the copolymer may be varied over a wide range, the preferred range being 1000 to 1500, more preferably 1000—9000.

Precise molecular weights have not been determined for all the copolymers used but in some cases viscosity determinations have been carried out. The preferred viscosity is less than 30 mPa.s (30 cps) as a 15% by weight aqueous solution in 1 molar NaCl.

The amount of hydroxy alkyl acrylate copolymer or soluble salt thereof used in the cementiferous compositons is preferably in the range 0.01% to 2.5% by weight on the cement in the cementiferous composition.

Suitable copolymers may be made by the copolymerisation of the hydroxy alkyl acrylate or methacrylate with the acrylic acid or other appropriate comonomers, using methods known in polymerisation technology. The resultant copolymer may be neutralised with a suitable base such as sodium hydroxide or other soluble base and diluted with water to the required concentration for use in the cementiferous compositions and plasticiser additives provided by this invention.

Examples

Materials and methods

(a) Mix design

| | |
|---|---|
| Ordinary Portland Cement ex Blue Circle | 350 kg/m$^3$ |
| 20 mm Croxden Gravel | 780 kg/m$^3$ |
| 10 mm Croxden Gravel | 330 kg/m$^3$ |
| Zone 3 Almington Pit Sand | 740 kg/m$^3$ |

% Fines =40
Aggregate/cement =5.3

Aggregates were washed, dried for 24 hours on a steam bed and allowed to cool for a further 24 hours.

(b) Mixing procedure

The aggregate is placed in the mixer, approximately half the mixing water added and mixed for 30 seconds. After standing for 1 minute the mixer is re-started and the cement added over 30 seconds. The remaining water (containing the additive) is added and mixed for a further 3 minutes.

(c) Slump test, plastic density, compressive strength

To British Standard BS 1881.

Results

Three copolymer additives (A, B and C) of the invention were prepared as described above and compared with known additives (D and E).

| | | $\overline{M}w$ | $\overline{M}n$ | Visc. (cps=mPa.S) 15% solids 1M NaCl |
|---|---|---|---|---|
| (i) 75 mole% acrylic acid<br>25 mole% hydroxy propyl acrylate | Admixture A | 8800 | 4300 | 5.5 |
| (ii) 67 mole% acrylic acid<br>33 mole% hydroxy propyl acrylate | Admixture B | 8500 | 4700 | 5.3 |
| (iii) 80 mole% acrylic acid<br>20 mole% hydroxy propyl acrylate | Admixture C | 9000 | 4500 | 5.7 |
| (iv) Calcium ligno-sulphonate 42% solution | Admixture D | | | |
| (v) Polymerised sodium naphthalene sulphonate 30% solution | Admixture E | | | |

$\overline{M}w$—weight average molecular weight.
$\overline{M}n$—number average molecular weight.

3

Admixtures A, B and C contained 0.25% by weight of composition of tributyl phosphate (TBP). These materials were evaluated as plasticisers in concrete using the same design as earlier described and having a water/cement (W/C) ratio=0.60.

Admixture dosage used was 140 cm³/50 kg cement as 40% active solutions of their sodium salts. Results are summarised in Table I.

### TABLE I

| Admixture | Plastic density (kg/m³) | Slump (mm) | Compressive Strength (N/mm²) | |
| --- | --- | --- | --- | --- |
| | | | 1 day | 7 day |
| Nil | 2330 | 30 | 10.0 | 37.8 |
| D | 2330 | 70 | 9.4 | 37.5 |
| A | 2330 | 160 | 8.8 | 37.0 |
| B | 2330 | 120 | 8.3 | 37.5 |
| C | 2310 | 160 | 7.5 | — |

These results show that the copolymer additives of this invention are more efficient plasticisers than D, admixture A being more efficient than B and equivalent to C.

All the admixtures show some retardation on 1 day compressive strength. Admixture A gave slightly more retardation than D with C, showing significantly more retardation than A at 1 day. All 7 day compressive strength results were similar.

A similar set of experiments were carried out at two different W/C ratios, i.e. 0.64 and 0.56. Results are shown in Tables II and III respectively.

### TABLE II

| Admixture | Dose cm³/50 kg cement | W/C | Plastic density (kg/m³) | Slump (mm) | Compressive Strength (N/mm²) | |
| --- | --- | --- | --- | --- | --- | --- |
| | | | | | 1 day | 7 day |
| Nil | Nil | 0.64 | 2315 | 55 | 9.0 | 34.5 |
| D | 140 | 0.64 | 2315 | 170 | 7.1 | 32.8 |
| A | 140 | 0.64 | 2315 | 210 | 6.8 | 33.5 |

### TABLE III

| Admixture | Dose cm³/50 kg cement | W/C | Plastic density (kg/m³) | Slump (mm) | Compressive Strength (N/mm²) | |
| --- | --- | --- | --- | --- | --- | --- |
| | | | | | 1 day | 7 day |
| Nil | — | 0.64 | 2330 | 55 | 9.0 | 34.5 |
| D | 140 | 0.56 | — | 10 | — | — |
| A | 140 | 0.56 | 2350 | 60 | 12.4 | 43.3 |
| E | 500 | 0.56 | 2350 | 80 | — | 42.7 |

It can be seen that D is ineffective at a W/C of 0.56 whereas admixture A still gives a slump similar to the control with a water reduction of 12.5%. E required dosage of 500 cm³/50 kg cement to give a similar water reduction.

Compressive strengths are significantly higher than control at 1 and 7 days.

Further work was done to determine the effect of changes in the molecular weight and molar ratio of the components of the copolymer. Details of the copolymer are set out in Table IV and the effects on concrete are shown in Table V.

4

### TABLE IV
### Acrylic acid (Na salt)-Hydroxyl
### Propyl Acrylate Copolymers

| Copolymer (moles) | | Sample No. | Solids w/w | pH | Visc. (cps) 25% in water | 15% Copolymer in 1M NaCl (cps) |
|---|---|---|---|---|---|---|
| AA | HPA | | | | | |
| 3 | 1 | 361/11 | 40.0 | 7.5 | 37 | 5.0 |
| | | 361/8 | 41.0 | 7.5 | 42 | 5.9 |
| | | 361/12 | 40.0 | 7.5 | 50 | 6.6 |
| 2.5 | 1 | 361/16 | 46.8 | 7.1 | 38 | 5.1 |
| | | 361/15 | 45.5 | 7.3 | 43 | 5.4 |
| | | 361/25 | 44.3 | 7.5 | 55 | 6.9 |
| 2 | 1 | 361/18 | 44.4 | 7.4 | 38 | 5.9 |
| | | 361/19 | 42.6 | 7.6 | 42 | 6.8 |
| | | 361/26 | 38.0 | 7.6 | 58 | 7.7 |

AA=Acrylic acid
HPA=Hydroxy propyl acrylate.
CPS=mPa.S

These copolymers were evaluated in a 350 kg/m$^3$ OPC concrete mix design.

Mix design

| | |
|---|---|
| OPC ex Blue Circle | 350 kg/m$^3$ |
| 20 mm Croxden Gravel | 780 kg/m$^3$ |
| 10 mm Croxden Gravel | 330 kg/m$^3$ |
| Zone 3 Almington Pit Sand | 740 kg/m$^3$ |

% Fines =40
Aggregate/cement =5.3
Water/cement =0.6

The copolymers were dosed at 0.28% bwc as 30% aqueous solutions (+0.25% by weight of the composition tributyl phosphate as air entraining suppressant) and the results are detailed below:

### TABLE V

| Sample No. | Mole %AA | Molecular weight as function of viscosity | Slump (mm) | Compressive strength (N/mm$^2$) | | |
|---|---|---|---|---|---|---|
| | | | | 1 day | 7 day | 28 day |
| 361/11 | 75 | | 110 | 8.6 | 31.4 | 39.6 |
| 361/8 | 75 | Increasing | 90 | 8.8 | 31.4 | 40.4 |
| 361/12 | 75 ↓ | | 80 | 8.3 | 30.9 | 40.8 |
| 361/16 | 71.4 | | 110 | 8.5 | 31.9 | 41.3 |
| 361/15 | 71.4 | Increasing | 95 | 8.8 | 31.7 | 38.6 |
| 361/25 | 71.4 ↓ | | 90 | 8.6 | 31.5 | 39.0 |
| 361/18 | 67 | | 105 | 8.4 | 30.6 | 38.0 |
| 361/19 | 67 | Increasing | 105 | 8.1 | 31.2 | 37.0 |
| 361/26 | 67 ↓ | | 95 | 7.4 | 29.5 | 37.8 |
| Nil | Nil | — | 20 | 9.8 | 30.4 | 40.0 |

AA=Acrylic acid.

These results suggest that all the copolymers show some retardation of 1 day compressive strength, being most significant with the 67 mole% AA (2/1) polymers. 7 and 28 day compressive strengths are very similar to control concrete except perhaps with the 67 mole% AA polymers which are somewhat lower. Plasticising action is shown to be related to the molecular weight/viscosity of the polymers and tends to increase as molecular weight/viscosity decreases.

The super-plasticising properties of the additives provided by this invention were compared with admixture E.

The additive of the invention was a sodium salt of a 2.5/1 AA/HPA copolymer and comprised:
75 parts of a 40% solids copolymer solution
25 parts of water, and
0.25 parts tributyl phosphate (TBP)
All parts by weight and referred to as EP 82/27.

Super-plasticising properties
Flowing concrete

Super-plasticised concrete mixes were produced using admixture E and EP 82/27 at a range of dosage levels. Workability was measured using the flow table method (DIN 1048). Flow 'A' refers to the spread before tamping and flow 'B' to the spread after the prescribed number of tamps.

Mix design

| | |
|---|---|
| OPC ex Blue Circle | 350 kg/m³ |
| 20 mm Croxden Gravel | 780 kg/m³ |
| 10 mm Croxden Gravel | 330 kg/m³ |
| Zone 3 Almington sand | 740 kg/m³ |

% Fines          =40
Aggregate/cement =5.3
Water/cement     =0.66

Results are shown in Table VI.

TABLE VI

| Admixture | Admixture dose % by wt. OPC | Slump (mm) | Flow 'A' (cm) | Flow 'B' (cm) | Compressive strength (N/mm²) | | |
|---|---|---|---|---|---|---|---|
| | | | | | 1 day | 7 day | 28 day |
| Nil | — | 50 | 20 | — | 9.4 | 31.3 | 38.0 |
| Admix E | 0.3 | — | 21,23 | 47,47 | 8.1 | 29.7 | 38.5 |
| Admix E | 0.5 | — | 25,25 | 51,51 | 9.5 | 32.0 | 39.5 |
| Admix E | 0.74 | — | 26,27 | 55,56 | 8.3 | 32.0 | 39.0 |
| Admix E | 1.0 | — | 40,40 | 63,61 | 9.5 | 32.0 | 37.3 |
| EP 82/27 | 0.1 | — | 22,22 | 50,50 | 8.6 | 31.3 | 38.0 |
| EP 82/27 | 0.2 | — | 26,26 | 53,52 | 9.8 | 32.0 | 38.5 |
| EP 82/27 | 0.3 | — | 27,28 | 56,55 | 7.7 | 31.5 | 37.5 |
| EP 82/27 | 0.4 | — | 35,33 | 62,58 | 7.4 | 31.5 | 37.0 |

EP 82/27 is shown to produce highly workable concrete at much lower dosages than admixture E. The flow properties obtained by using admixture E at typical super-plasticiser dosage rates (0.6—1%) can be achieved by EP 82/27 at rates of addition in the range 0.2—0.4%.

High range water reduction

Admixture E and EP 82/27 were used to produce high range water reductions (constant workability) in the following mix design.

6

Mix design

| | |
|---|---|
| OPC ex Blue Circle | 350 kg/m³ |
| 20 mm Croxden Gravel | 780 kg/m³ |
| 10 mm Croxden Gravel | 330 kg/m³ |
| Zone 3 Almington Pit Sand | 740 kg/m³ |

% Fines      =40
Aggregate/cement   =5.3

Results shown in Table VII.

TABLE VII

| Admixture | Admixture Dose % by wt. OPC | W/C | Slump (mm) | % Water reduction | Compressive strength (N/mm²) | | |
|---|---|---|---|---|---|---|---|
| | | | | | 1 day | 7 day | 28 day |
| Nil | — | 0.66 | 60 | — | 8.2 | 27.3 | 38.5 |
| Admix E | 0.3 | 0.61 | 55 | 7.4 | 9.1 | 32.7 | 42.0 |
| Admix E | 0.5 | 0.59 | 50 | 10.9 | 11.0 | 32.6 | 43.0 |
| Admix E | 1.0 | 0.55 | 60 | 15.7 | 12.9 | 39.0 | 45.0 |
| Admix E | 1.5 | 0.53 | 50 | 19.6 | 15.6 | 44.4 | 46.8 |
| Admix E | 2.5 | 0.51 | 45 | 22.8 | 15.0 | 44.0 | 53.0 |
| EP 82/27 | 0.1 | 0.59 | 50 | 10.0 | 10.0 | 33.1 | 44.0 |
| EP 82/27 | 0.2 | 0.59 | 55 | 10.9 | 10.2 | 36.3 | 46.0 |
| EP 82/27 | 0.5 | 0.55 | 55 | 15.7 | 11.1 | 39.8 | 49.8 |
| EP 82/27 | 0.8 | 0.53 | 60 | 19.6 | 11.1 | 44.0 | 51.0 |
| EP 82/27 | 1.5 | 0.51 | 55 | 22.8 | 9.2 | 45.0 | 56.8 |

Compared with admixture E, EP 82/27 is shown to perform very efficiently as a water reducing agent, producing similar increases in compressive strength at much lower doses.

Evaluation of range of hydroxy monomers
Abbreviations used:
AA=Acrylic acid
MAA=Methacrylic acid
HPA=Hydroxy propyl acrylate
HPMA=Hydroxy propyl methacrylate
HEMA=Hydroxy ethyl methacrylate
HEA=Hydroxy ethyl acrylate
TBP=Tri-n-butyl phosphate

Copolymers were prepared as 30% w/w active solutions as sodium salts in water (+0.25% TBP).

| | | | | Visc. (cps=mPa.S) 15% 1M aqueous NaCl |
|---|---|---|---|---|
| F | 2.5/1 molar | MAA/HPA | | 7.4 |
| G | 2.5/1 molar | AA/HEMA | | 5.1 |
| H | 2.5/1 molar | AA/HPMA | | 5.4 |
| J | 2.5/1 molar | AA/HEA | | 3.4 |

7

The copolymers were evaluated in concrete in comparison with EP 82/27 (viscosity 5.1 cps=mPa.S) (2.5/1 molar AA/HPA).

Mix design

| | |
|---|---|
| OPC | 3.5 kg |
| 20 mm Croxden Gravel | 7.8 kg |
| 10 mm Croxden Gravel | 3.3 kg |
| Zone 3 Almington Pit Sand | 7.0 kg |
| Water/cement  =0.61 | |

Admixtures were dosed at 0.4% bwc in order to produce flowing concrete.
Workability of the concrete was measured using 'Flow Table' according to DIN 1048.
Flow A refers to spread before tamping and Flow B to the spread after tamping.

TABLE VIII

| Admixture | Slump (mm) | Flow A (cm) | Flow B (cm) | Compressive Strength (N/mm$^2$) | |
|---|---|---|---|---|---|
| | | | | 7 day | 28 day |
| Nil | 90 | 23 | 40 | 33.2 | 44.8 |
| EP 82/27 | — | 31 | 60 | 34.5 | 44.0 |
| F | — | 32 | 61 | 32.5 | 44.3 |
| G | — | 35 | 61 | 34.5 | 45.2 |
| H | — | 39 | 64 | 32.8 | 44.3 |
| J | — | 32 | 60 | 33.0 | 45.5 |

Using the same mix design, admixtures G and H were re-evaluated in comparison with both EP 82/27 and admixture E in order to determine 1 day compressive strengths and 'set' times.

TABLE IX

| Admixture | Admixture dose % bwc | Slump (mm) | Flow A (cm) | Flow B (cm) | Compressive strength (N/mm$^2$) 1 day |
|---|---|---|---|---|---|
| Nil | — | 90 | 23 | 40 | 9.5 |
| EP 82/27 | 0.4 | — | 43 | 63 | 8.1 |
| G | 0.4 | — | 43 | 66 | 8.8 |
| H | 0.3 | — | 44 | 67 | 8.4 |
| H | 0.4 | — | 49 | 68 | 8.2 |
| Admix E | 1.0 | — | 48 | 66 | 8.5 |

Penetration tests were conducted using a Proctor Needle (according to ASTM No. C-403-80) were carried out and the results are summarised below:

# 0 097 513

## TABLE X

| Admixture | dose % bwc | Extension of Set over Control (hours) | |
| --- | --- | --- | --- |
| | | Initial | Final |
| EP 82/27 | 0.4 | 2.2 | 2.2 |
| G | 0.4 | 1.4 | 1.6 |
| H | 0.3 | 1.0 | 1.3 |
| H | 0.4 | 2.7 | 2.5 |
| Admix E | 1.0 | 2.7 | 2.5 |

The plasticising performance of a range of hydroxy acrylates/methacrylates demonstrates that the AA/HPMA copolymer is preferred.

The use of methacrylic acid instead of acrylic acid in EP 82/27 gives similar results.

In concretes of similar initial high workability *set retardation* is in the following order (2.5/1 copolymers with AA).

Admixture E≥HPA>HEMA>HPMA
(retards most)          (retards least)

Various copolymers were made to demonstrate the effect of varying the AA/HPMA ratio of the general type of admixture H.

| | | | Visc. (cps=mPa.S) 15% solids in 1M aqueous NaCl |
| --- | --- | --- | --- |
| K 2/1 molar | (67 mole% AA) | AA/HPMA | 5.3 |
| L 2.5/1 molar | (71 mole% AA) | AA/HPMA | 5.1 |
| M 3.0/1 molar | (75 mole% AA) | AA/HPMA | 6.4 |
| N 5.0/1 molar | (83 mole% AA) | AA/HPMA | 5.2 |
| P 1/0 molar | (100 mole% AA) | AA/- | 6.6 |

Each copolymer was made up into the following additive composition:

30% Copolymer as Na salt
69.75% Water
0.25% TBP

Mix design

| | |
| --- | --- |
| OPC | 350 kg/m$^3$ |
| 20 mm Croxden Gravel | 780 kg/m$^3$ |
| 10 mm Croxden Gravel | 330 kg/m$^3$ |
| Zone 3 Almington Pit Sand | 700 kg/m$^3$ |
| Water | 200 kg/m$^3$ |

Water/cement =0.57
% Fines =38.7
Aggregate/cement =5.2

Admixture dose=0.4% bwc.

# 0 097 513

## TABLE XI

| Admixture | Slump (mm) | Flow A | Flow B | Compressive Strength (N/mm²) 1 day | Compressive Strength (N/mm²) 7 day |
|---|---|---|---|---|---|
| Nil | 60 | 20 | * | 11.2 | 38.0 |
| K | | 32 | 56 | 9.5 | 37.0 |
| L | | 30 | 56 | 9.6 | 38.0 |
| M | | 28 | 53 | 8.8 | 35.5 |
| N | | 24 | 50 | 8.6 | 38.3 |
| P | | 20 | 44 | 8.0 | 34.7 |

*No cohesion

Results show mole% AA in copolymer significantly affects performance as a plasticiser and to some extent early compressive strength development and support the preferred 60 to 85 mole% arylic acid content.

Comparisons were made with two other commercially-available plasticisers. They were:

Composition B—
a calcium lignosulphonate 43% w/w solution Composition C—
a polysaccharide-based water reducing agent

Mix design

| | |
|---|---|
| OPC ex Blue Circle | 350 kg/m³ |
| 20 mm Croxden Gravel | 780 kg/m³ |
| 10 mm Croxden Gravel | 330 kg/m³ |
| Zone 1 Almington Pit Sand | 70 kg/m³ |
| Zone 2 Almington Pit Sand | 670 kg/m³ |

Aggregate/cement =5.3
% Fines =40

## TABLE XII

| Admixture | Admixture dose % bwc | W/C | Plastic density (kg/m³) | Slump (mm) | Compressive Strength (N/mm²) 1 day | Compressive Strength (N/mm²) 7 day | Compressive Strength (N/mm²) 28 day |
|---|---|---|---|---|---|---|---|
| Nil | Nil | 0.67 | 2360 | 45 | 3.1 | 31.8 | 40.2 |
| EP 82/27 | 0.05 | 0.67 | 2360 | 85 | 3.1 | 31.7 | 39.3 |
| EP 82/27 | 0.1 | 0.67 | 2360 | 160 | 2.8 | 31.0 | 39.6 |
| EP 82/27 | 0.2 | 0.67 | 2360 | 195 | 3.1 | 31.3 | 40.0 |
| Comp B | 0.2 | 0.67 | 2360 | 140 | 3.1 | 32.4 | 41.2 |
| Comp B | 0.3 | 0.67 | 2360 | 150 | 2.3 | 30.7 | 39.1 |
| Comp B | 0.4 | 0.67 | 2360 | 180 | 2.3 | 31.2 | 41.0 |
| Comp C | 0.2 | 0.67 | 2360 | 175 | 3.3 | 33.1 | 40.5 |
| Comp C | 0.3 | 0.67 | 2360 | 190 | 2.7 | 33.6 | 41.2 |
| Comp C | 0.4 | 0.67 | 2360 | 220 | 1.0 | 33.9 | 43.0 |

At the dosage levels used here EP 82/27 shows no retardation of 1 day compressive strength. Increased dosages of composition B and composition C to obtain higher workability result in retardation of early strength.

10

7 and 28 day compressive strength results are all similar.

EP 82/27 is shown to perform as a highly effective low dosage plasticiser.

Comparing the dosage levels required to produce concrete with, e.g., 150 mm slump:

| | |
|---|---|
| EP 82/27 | 0.09% bwc |
| Composition B | 0.25% bwc |
| Composition C | 0.16% bwc |

## Claims

1. A cementiferous composition comprising as a plasticiser additive, a copolymer or soluble salt thereof comprising from 50 to 95 mole% of an ethylenically polymerisable carboxylic acid and from 5 to 50 mole% of a hydroxy alkyl ester of an ethylenically polymerisable carboxylic acid.

2. A cementiferous composition as claimed in Claim 1 in which the acid is selected from methacrylic acid, maleic acid and acrylic acid and the ester is selected from hydroxy ethyl, propyl and butyl acrylates and methacrylates.

3. A cementiferous composition as claimed in Claim 1 or Claim 2 in which the mole percentage of acrylic acid in the copolymer is in the range 60 to 85 mole%.

4. A cementiferous composition as claimed in Claim 1, 2 or 3 in which the molecular weight of the copolymer is in the range 1000 to 15000.

5. A cementiferous composition as claimed in Claim 4 in which the molecular weight of the copolymer is in the range 1000—9000.

6. A cementiferous composition as claimed in any one of the preceding claims in which the amount of hydroxy alkyl acrylate copolymer, or soluble salt thereof in the cementiferous composition is in the range 0.01% to 2.5% by weight on the cement in the cementiferous composition.

7. A plasticiser additive composition comprising an aqueous solution of a copolymer, or a soluble salt thereof, comprising 50 to 95 mole% of an ethylenically polymerisable carboxylic acid and from 5 to 50 mole% of a hydroxy alkyl ester of an ethylenically polymerisable carboxylic acid and an amount of an anti-foaming agent effective to reduce foaming.

8. A plasticiser additive composition as claimed in Claim 7 in which the acid is maleic acid, methacrylic acid or acrylic acid and the ester is hydroxy ethyl, propyl and butyl acrylate or methacrylates.

9. A plasticiser additive composition as claimed in Claim 7 or 8, in which the amount of anti-foaming agent is in the range 0.1 to 2% by weight of the copolymer or salt thereof.

10. A plasticiser additive as claimed in Claims 7, 8 or 9, in which the anti-foaming agent is selected from tributyl phosphate, di-butyl phthalate, water-insoluble alcohols and silicone derivatives.

11. A plasticiser additive as claimed in any one of the Claims 7, 8, 9 or 10, in which the hydroxy alkyl acrylate is hydroxy propyl methacrylate.

12. A plasticiser additive as claimed in any one of the Claims 7, 8, 9, 10 or 11, in which the mole percentage of acrylic acid in the copolymer is in the range 60 to 85 mole%.

13. A process for the preparation of a plasticised cementiferous composition comprising adding to a cementiferous material a plasticiser additive as claimed in any one of the Claims 7 to 12.

14. A cementiferous composition comprising a plasticiser additive as claimed in any one of the Claims 7 to 12.

## Patentansprüche

1. Zementzusammensetzung, die als Weichmacher-Additiv ein Kopolymer oder ein lösliches Salz davon, das im wesentlichen zwischen 50 und 95 Molprozent einer ethylenartig polymerisierbaren Karbonsäure und zwischen 5 und 50 Molprozent eines Hydroxyalkylesters einer ethylenartig polymerisierbaren Karbonsäure beinhaltet, umfaßt.

2. Zementzusammensetzung nach Anspruch 1, wobei die Säure aus Methakrylsäure, Maleinsäure und Akrylsäure und der Ester aus Hydroxyethyl-, -propyl- und -butylakrylaten und -methakrylaten ausgewählt ist.

3. Zementzusammensetzung nach Anspruch 1 oder 2, wobei der molare Prozentsatz der Akrylsäure in dem Kopolymer in dem Bereich von 60 bis 85 Molprozent liegt.

4. Zementzusammensetzung nach Anspruch 1, 2 oder 3, wobei das Molekulargewicht des Kopolymers in dem Bereich von 1000 bis 15000 liegt.

5. Zementzusammensetzung nach Anspruch 4, wobei das Molekulargewicht des Kopolymers in dem Bereich 1000—9000 liegt.

6. Zementzusammensetzung nach einem der vorhergehenden Ansprüche, wobei die Menge des Hydroxyalkyl-Akrylat-Kopolymers oder des löslichen Salzes davon in der Zementzusammensetzung in dem Bereich von 0,01 bis 2,5 Gew.-% an Zement in der Zementzusammensetzung liegt.

7. Weichmacher-Additiv-Zusammensetzung, die ein wässrige Lösung eines Kopolymers oder eines

11

löslichen Salzes davon aus 50 bis 95 Molprozent einer ethylenartig polmerisierbaren Karbonsäure und 5 bis 50 Molprozent eines Hydroxyalkylesters einer ethylenartig polymerisierbaren Karbonsäure, und eine Menge eines Anti-Schaummittels, die bei der Reduzierung der Schaumbildung wirksam ist, enthält.

8. Weichmacher-Additiv-Zusammensetzung nach Anspruch 7, wobei die Säure Maleinsäure, Methakrylsäure oder Akrylsäure und der Ester Hydroxyethyl-, -propyl- und -butylakrylat oder -methakrylat ist.

9. Weichmacher-Additiv-Zusammensetzung nach Anspruch 7 oder 8, wobei die Menge des Anti-Schaummittels in dem Bereich von 0,1 bis 2 Gew.-% des Kopolymers oder dessen Salzes liegt.

10. Weichmacher-Additiv nach Anspruch 7, 8 oder 9, wobei das Anti-Schaummittel aus Tributylphosphat, Dibutylphthalat, wasserunlöslichen Alkoholen und Silikonderivaten ausgewählt ist.

11. Weichmacher-Additiv nach einem der Ansprüche 7, 8, 9 oder 10, wobei das Hydroxyalkylakrylat Hydroxypropylmethakrylat ist.

12. Weichmacher-Additiv nach einem der Ansprüche 7, 8, 9 10 oder 11, wobei der molare Prozentsatz der Akrylsäure in dem Kopolymer in dem Bereich von 60 bis 85 Molprozent liegt.

13. Verfahren zur Herstellung einer plastifizierten Zementzussammensetzung, das die Zugabe eines Weichmacher-Additivs nach einem der Ansprüche 7 bis 12 zu einem Zementmaterial umfaßt.

14. Zementzusammensetzung, die ein Weichmacher-Additiv nach einem der Ansprüche 7 bis 12 enthält.

## Revendications

1. Composition cimentifère comprenant, à titre d'additif plastifiant, un copolymère ou un sel soluble de celui-ci comprenant de 50 à 95 moles% d'un acide carboxylique éthyléniquement polymérisable et de 5 à 50 moles% d'un ester hydroxyalkylique d'un acide carboxylique éthyléniquement polymérisable.

2. Composition cimentifère selon la revendication 1, dans laquelle l'acide est choisi parmi l'acide méthacrylique, l'acide maléique et l'acide acrylique et l'ester est chosi parmi les hydroxyéthyl-, propyl- et butyl-acrylates et méthacrylates.

3. Composition cimentifère selon la revendication 1 ou 2, dans laquelle le pourcentage molaire de l'acide acrylique dans le copolymère est de 60 à 85 moles%.

4. Composition cimentifère selon la revendication 1, 2 ou 3, dans laquelle le poids moléculaire du copolymère est de 1000 à 15.000.

5. Composition cimentifère selon la revendication 4, dans laquelle le poids moléculaire du copolymère est de 1000 à 9000.

6. Composition cimentifère selon l'une quelconque des revendications précédentes, dans laquelle la quantité du copolymère hydroxy-alkylacrylate ou du sel soluble de celui-ci dans la composition cimentifère est comprise entre 0,01 et 2,5% par rapport au poids du ciment dans la composition cimentifère.

7. Composition d'additif plastifiant comprenant une solution aqueuse d'un copolymère ou sel soluble de celui-ci, qui comprend de 50 à 95 moles% d'un acide carboxylique éthyléniquement polymérisable et de 5 à 50 moles% d'un ester hydroxy-alkylique d'un acide carboxylique éthyléniquement polymérisable, et une quantité d'un agent d'anti-moussage efficace pour réduire le moussage.

8. Composition d'additif plastifiant selon la revendication 7, dans laquelle l'acide est l'acide maléique, l'acide méthacrylique ou l'acide acrylique et l'ester est l'hydroxy-éthyl-, propyl-, ou butylacrylate ou méthacrylate.

9. Composition d'additif plastifiant selon la revendication 7 ou 8, dans laquelle la quantité de l'agent d'anti-moussage est comprise entre 0,1 et 2% par rapport au poids du copolymère ou de son sel.

10. Additif plastifiant selon la revendication 7, 8 ou 9, dans lequel l'agent d'anti-moussage est choisi parmi le phosphate de tributyle, le phtalate de dibutyle, les alcools insolubles dans l'eau et les dérivés siliconiques.

11. Additif plastifiant selon l'une quelconque des revendications 7, 8, 9 ou 10 dans lequel l'hydroxy-alkylacrylate est l'hydroxypropylméthacrylate.

12. Additif plastifiant selon l'une quelconque des revendications 7, 8, 9, 10 et 11, dans lequel la proportion molaire de l'acide acrylique dans le copolymère est de 60 à 85 moles%.

13. Procédé de préparation d'une composition cimentifère plastifiée, qui consiste à ajouter à une matière cimentifère un additif plastifiant selon l'une quelconque des revendications 7 à 12.

14. Composition cimentifère comprenant un additif plastifiant selon l'une quelconque des revendications 7 à 12.